# EUROPEAN PATENT SPECIFICATION

(11) **EP 3 779 554 B1**
(45) Date of publication and mention of the grant of the patent: **17.01.2024**
(21) Application number: 19191816.8
(22) Date of filing: 14.08.2019
(51) Int. Cl.: G02B 21/00, G01N 21/64, G02B 27/10, G02B 27/14, G02B 21/16

(54) **OPTICAL BEAM SPLITTER ASSEMBLY, CAMERA HEAD, AND MICROSCOPE ASSEMBLY**
OPTISCHE STRAHLTEILERANORDNUNG, KAMERAKOPF UND MIKROSKOPANORDNUNG
ENSEMBLE SÉPARATEUR DE FAISCEAU OPTIQUE, TÊTE DE CAMÉRA ET ENSEMBLE MICROSCOPE

(43) Date of publication of application: 17.02.2021
(73) Proprietor: Leica Instruments (Singapore) Pte. Ltd., 608924 Singapore (SG)
(72) Inventor: Güntert, Michael, 9435 Heerbrugg (CH); Weiger, Ulrich, 9462 Montlingen (CH); Hocke, Marc, 9445 Rebstein (CH)
(74) Representative: Grünecker Patent- und Rechtsanwälte PartG mbB

(56) References cited:
- US-A1- 2017 176 336
- US-A1- 2019 076 007
- US-A1- 2019 170 647
- US-B2- 9 173 554

## Description

The invention relates to an optical beam splitter assembly, a camera head, and a microscope assembly.

Optical beam splitter assemblies can be used for example in microscopes, in particular in surgical microscopes when fluorophores are used to mark characteristic tissue.

An optical beam splitter assembly for recording images in at least three different spectral portions, can comprise a first and a second beam splitter, and a first, second and third light path, the first light path being configured to guide light of a first spectral portion from a light entrance section to a first light output section, the second light path being configured to guide light of a second spectral portion from the light entrance section to a second light output section, the second light output section being spaced apart from the first light output section, and the third light path being configured to guide light of a third spectral portion from the light entrance section to a third light output section, the third light output section being spaced apart from the first light output section and the second light output section, wherein the second light path traverses the first beam splitter, and the third light path traverses the first and the second beam splitter.

This allows for recording of images in the at least three different spectral portions.

The optical beam splitter assembly can further comprise three cameras for detecting the light at the first, second and third output section, one camera being a black-and-white camera without a Bayer filter and two cameras comprising Bayer filters. Further, an image sensor and/ or a camera associated with the first light output section can be configured to record a color image in a color space, the color space having a predetermined set of color channels, wherein the spectral portion of the first light path comprises two spectral subportions, wherein a first subportion overlaps with a first color channel of the color space and not a second color channel of the color space, wherein a second subportion overlaps at least with the second color channel.

A camera head and a microscope assembly comprise such an optical beam splitter assembly.

US 2019/0170647 A1 shows an imaging system for fluorescence imaging using cameras with RGB channels.

The invention is as defined in claims 1, 8 and 9. Optional features are defined in the dependent claims.

It is the object of the invention to provide a solution that improves the image quality.

According to the invention, this is achieved when the reflected spectral portion recorded by the camera associated with either the first light output section or the second light output section lies between the two spectral subportions recorded at the other one of the first light output section and the second light output section, respectively.

The above apparatus may be further improved by adding one or more of the features that are described in the following. Each of the following features may be added to the apparatus independently of the other features. Moreover, each feature has its own advantageous technical effect, as is explained hereinafter.

The first beam splitter reflects light of the first spectral portion along the first light path. This can guide light of the first spectral portion along the first light path.

Similarly, the second beam splitter reflects light of the second spectral portion along the second light path. This can guide light of the second spectral portion along the second light path.

The first beam splitter transmits light of the second spectral portion. This can make the configuration simple.

The second beam splitter may transmit light of the first spectral portion. Again, this can make the configuration simple.

In a further embodiment, the second beam splitter can be such that it does not transmit the first spectral portion. In particular, the light reaching the second beam splitter can be such that it does not comprise the first spectral portion. In such a case, it is not necessary for the second beam splitter to have any particular properties for light of the first spectral portion. It could absorb or reflect such light.

In order to record an image of a characteristic tissue or region, for at least one of the first and the second light paths, an emission band of a fluorophore may overlap with the corresponding spectral portion.

In an advantageous embodiment, at least one beam splitter is a dichroic mirror. This can simplify the set-up. The dichroic mirror can be such that it reflects a certain wavelength at a specified angle. The dichroic mirror can comprise a layer or a coating of a defined uniform thickness. The dichroic mirror can also comprise more than one layer to select more than one wavelength.

At least one of the spectral portions of the light guided by the first light path and the second light path may comprise two spectral subportions spaced apart from each other. This can facilitate a recording of two distinct signals at one light output section.

The optical beam splitter assembly can be configured for use with at least two fluorophores, each of the two fluorophores having a different fluorescence emission band, wherein for each spectral subportion, a fluorescence emission band of a fluorophore overlaps with the spectral subportion and/or lies within the spectral subportion. This can allow for a recording of images associated with the two fluorophores. The two fluorophores can be fluorescein and ICG.

The optical beam splitter assembly further comprises three cameras for detecting the light at one of the first, second and third output sections. The camera can comprise an image sensor. The camera and/or the image sensor can be arranged at the first, second or third output section, respectively.

Two cameras comprise a Bayer filter. Such camera can also be designated as color camera. This can help to record images, in particular when the corresponding spectral portion is wide and/or different spectral portions have to be differentiated, for example different fluorescence emission bands.

In an advantageous embodiment, a subfilter of the Bayer filter is selected to match a fluorescence emission band of one of the fluorophores. This increases the signal intensity. In particular, a maximum of the transmittance of the subfilter can be located within 50 nm, preferably within 20 nm of a wavelength of the maximum of the fluorescence emission band. For example, one subfilter can have a maximum of transmission at 560 nm to match fluorescein. A further subfilter can have a maximum at 850 nm to match ICG (Indocyanine Green)

A transmittance of the subfilter at the wavelength of the maximum of the fluorescence emission band can be more than 80 percent, preferably more than 90 percent, especially more than 95 percent.

In order to maximize the yield, a fluorophore can be selected so that its fluorescence emission band overlaps with the spectral portion transmitted by a subfilter of the Bayer filter.

To achieve a high sensitivity, at least one camera is a black-and-white camera without a Bayer filter. The losses occurring due to the subfilters of the Bayer filter can then be avoided. The black-and-white camera can comprise a black-and-white image sensor. The black-and-white image sensor can also be named a grey image sensor as it can measure different intensities which correspond to shades of grey if displayed on a monochrome display.

The optical beam splitter assembly comprises three cameras, one camera being a black-and-white camera without a Bayer filter and two cameras comprising Bayer filters. The two cameras with the Bayer filters allow differentiating between different wavelengths while the black-and-white camera can provide a high sensitivity for example for weak signals.

In one embodiment, the black-and-white camera without the Bayer filter can be arranged at the second light output section. Further, the cameras with the Bayer filters can be arranged at the first and the third light output sections.

In another example, the camera with the black-and-white image sensor and without the Bayer filter can be arranged at the first light output section. Further, the cameras with the Bayer filters can be arranged at the second and the third light output sections.

An image sensor and/ or a camera associated with the first light output section is configured to record a color image in a color space, the color space having a predetermined set of color channels, wherein the spectral portion of the first light path comprises two spectral subportions, wherein a first subportion overlaps with a first color channel of the color space and not a second color channel of the color space, wherein a second subportion overlaps at least with the second color channel. This can facilitate a separation of the signals by simply selecting one of the color channels.

The first subportion can be associated with fluorescein and the first color channel can be a green channel. Green can in particular relate to the portion of 500-565 nm.

The second subportion can be associated with ICG and the second color channel can be a red channel. Red can in particular relate to the portion of above 625 nm.

When specifying the wavelength, this can in particular relate to the wavelength in a vacuum. In a medium, the wavelength can be shorter. The frequency in different media can remain the same and the product of wavelength times frequency can be the speed of light in the medium.

The two color channels may be separated by another color channel. This can allow for an easy recording of the distinct images as cross-talk between the color channels is minimized.

In an easy-to-apply configuration, the color channel is a primary color. In particular, the color space may be an RGB color space with red, green and blue as the primary colors.

Preferably, the optical beam splitter assembly is configured for guiding light of two fluorescence emission bands with a first and a second wavelength to the first light output section and light of a fluorescence emission band with a third wavelength between the first and the second wavelength to the second light output section. The damping of the first and the second wavelength is then minimal.

In a further embodiment, the image sensor and/or the camera associated with the second output section can be configured to record a color image in a color space, the color space having a predetermined set of color channels and the spectral portion of the first light path comprises two spectral subportions, wherein a first subportion overlaps with a first color channel of the color space and not a second color channel of the color space, wherein a second subportion overlaps at least with the second color channel. The first subportion can again be associated with fluorescein and the first color channel can be a green channel. The second subportion can be associated with ICG and the second color channel can be a red channel.

The optical beam splitter assembly can be configured for guiding light of two fluorescence emission bands with a first and a second wavelength to the second light output section and light of a fluorescence emission band with a third wavelength between the first and the second wavelength to the first light output section. This can allow a good separation of the fluorescence emission bands.

The spectral portion recorded by the image sensor and/or the camera associated with the second light output section can lie between the two spectral subportions recorded at the first light output section. This can allow a good separation of the portions.

In particular, the optical beam splitter assembly can be configured to guide white light to the third output section. The white light can be the portion of the light that remains when the first and the second portion are filtered out. The white light can be the third portion. This white light can be used to produce an image that gives an overview of an area where surgery is performed.

At least one beam splitter can comprise a coating on a prism. This can give a compact configuration.

In an advantageous embodiment, the optical beam splitter assembly comprises at least one of a first prism comprising the light entrance section and the first light output section, a second prism comprising the second light output section, and a third prism comprising the third light output section. This can have the effect that the optical beam splitter assembly can be compact.

The first beam splitter may be between the first prism and the second prism to achieve a solid configuration. Similarly, the second beam splitter may be between the second prism and the third prism.

In a further development that results in a space-saving and solid arrangement, the optical beam splitter assembly comprises three prisms that are connected to each other to form a unitary block. The block can be monolithic.

In an advantageous embodiment, the first and the second spectral portion do not overlap. Thus, the signal strength is improved.

Similarly, the first, the second and the third spectral portion do not overlap in an advantageous embodiment.

The optical beam splitter assembly can be configured for the combined use of fluorescein, ICG and 5-ALA. This can for example be achieved when a first subportion and a second subportion of a first portion and a second portion are such that each of them overlaps with one fluorescence emission band of fluorescein, ICG and 5-ALA but not with the fluorescence emission bands of the other fluorophores.

A microscope assembly can further comprise an image processing device, wherein the image processing device is configured to create a single image from three images from the three light output sections.

Next, an embodiment is further described by way of example only using a sample embodiment, which is also shown in the drawings. In the drawings, the same reference numerals are used for features which correspond to each other with respect to at least one of function and design.

The combination of features shown in the enclosed embodiment is for explanatory purposes only and can be modified. For example, a feature of the embodiment having a technical effect that is not needed for a specific application may be omitted. Likewise, a feature which is not shown to be part of the embodiment may be added if the technical effect associated with this feature is needed for a particular application.
- Fig. 1: shows a schematic representation of an embodiment of a microscope assembly comprising an embodiment of an optical beam splitter assembly;
- Fig. 2: shows a graph representing the spectral portion arriving at the first light output section when visible and fluorescence light enters the light entrance section;
- Fig. 3: shows a graph representing the spectral portion arriving at the second light output section when visible and fluorescence light enters the light entrance section;
- Fig. 4: shows a graph representing the spectral portion arriving at the third light output section when visible and fluorescence light enters the light entrance section.

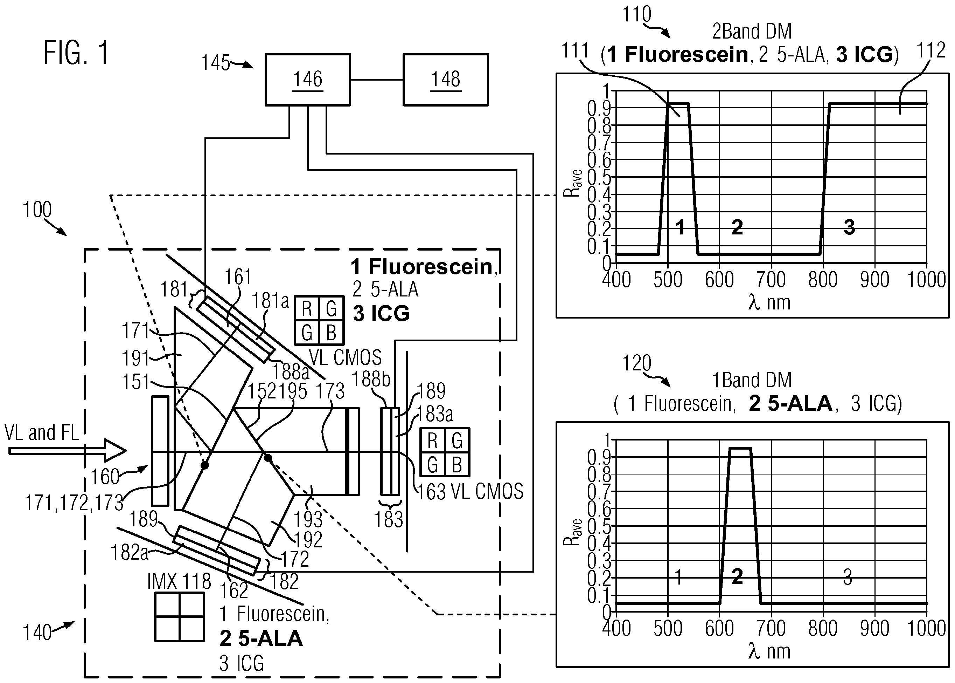

In Fig. 1, a microscope assembly 145 comprising a beam splitter assembly 100 is shown. The beam splitter assembly 100 allows to take and record images of an area in which surgery is performed.

Three cameras 181, 182, 183 are present that are suitable for recording images of different spectral portions 110, 120, 130. By this, fluorescences from different fluorophores can be imaged separately. The images acquired in this way can then be input into an image processing device 146 of the microscope assembly and be combined as desired. For example, two or three images can be overlaid and combined into a single image in which characteristic tissue can be seen by a surgeon. The intensities of the signals of the fluorophores might be adjusted as desired and for example be displayed with false colors to allow an easy differentiation. Such an image can then be displayed on a display device 148 or viewed in a viewing system.

The optical beam splitter assembly 100 comprises a first beam splitter 151 and a second beam splitter 152. The two beam splitters 151, 152 serve to split the light into a first light path 171, a second light path 172, and a third light path 173.

The first light path 171 is configured to guide light of a first spectral portion 110 from a light entrance section 160, at which the light enters the optical beam splitter assembly 100, to a first light output section 161.

Similarly, the second light path 172 is configured to guide light of a second spectral portion 120 from the light entrance section 160 to a second light output section 162, the second light output section 162 being spaced apart from the first light output section 161.

Finally, the third light path 173 is configured to guide light of a third spectral portion 130 from the light entrance section 160 to a third light output section 163, the third light output section 163 being spaced apart from the first light output section 161 and the second light output section 162.

The second light path 172 traverses the first beam splitter 151, and the third light path 173 traverses the first and the second beam splitter 151, 152.

The beam splitters 151, 152 can be each embodied as dichroic mirrors 155. Each dichroic mirrors 155 comprises at least one thin layer that reflects a predefined wavelength under a certain angle. Other wavelengths can be transmitted.

The first beam splitter 151 reflects light of the first spectral portion 110 along the first light path 171. The first beam splitter 151 transmits light of the second spectral portion 120 and further wavelengths that are not part of the first spectral portion 110. Similarly, the second beam splitter 152 reflects light of the second spectral portion 120 along the second light path 172 and can for example transmit other wavelengths. As no or almost no light of the first spectral portion 110 arrives at the second beam splitter 152, it could however also reflect light of the first spectral portion 110.

The optical beam splitter assembly 100 comprises three cameras 181, 182, 182 having three image sensors 181a, 182a, 183a for detecting the light at the first, second and third output section 161, 162, 163. To this end, the three image sensors 181a, 182a, 183a are arranged at the first, second or third output section 161, 162, 163, respectively.

In order to record signals coming from the characteristic tissue and the fluorophores, for at least one of the first and the second light paths 171, 172 an emission band of a fluorophore overlaps with the spectral portion 110, 120. For example, at least one of fluorescein, 5-ALA and ICG can be used as a fluorophore.

In the depicted embodiment, the spectral portion 110 of the light guided by the first light path 171 comprises two spectral subportions 111, 112 spaced apart from each other. This can be, for example, achieved by a first beam splitter 151 that reflects two spectral subportions and guides them onto the first image sensor 181a of the first camera 181 located at the first light output section 161.

For each spectral subportion 111, 112, a fluorescence emission band of a fluorophore overlaps with the spectral subportion 111, 112 or lies within the spectral subportion 111, 112. In particular, in this example, the first spectral subportion 111 associated with fluorescein is located around the typical fluorescence emission wavelength of 540 nm. The second spectral subportion 112 associated with ICG comprises wavelengths of around 750-900 nm.

The first camera 181 comprises a Bayer filter 188a. The Bayer filter 188a comprises three subfilters for selectively transmitting only one of red, green and blue onto each pixel. The area of the green subfilter comprises the combined area of the red and the blue subfilter. By using such a Bayer filter 188a, the two subportions 111, 112 relating to the two fluorophores can be separated easily by using only information from pixels relating to one of the subfilters. The two subportions 111, 112 are spaced apart from each other so that a cross talk between them is minimized. This means that a fluorescence signal, which has a natural bandwidth, has only a very small or no signal strength at the other subportion.

A subfilter of the Bayer filter 188a can be selected to match to a fluorescence emission band of one of the fluorophores. In particular a maximum of the transmittance of the subfilter can be located within 50 nm, preferably 20 nm of the fluorescence emission band maximum. A transmittance of the subfilter at the wavelength of the maximum of the fluorescence emission band can be more than 80 percent, preferably more than 90 percent, even more preferably at least 95 percent.

Advantageously, a fluorophore is selected so that its fluorescence emission band overlaps with the spectral portion transmitted by a subfilter of the Bayer filter 188a.

In order to achieve a high sensitivity, the second camera 182 comprises a black-and-white image sensor 182a, but not a Bayer filter. This can for example be useful when a weak signal or a fluorophore with a low quantum efficiency is used. For example, the second light path 172 can be associated with a spectral portion 120 relating to a fluorescence emission of 5-ALA.

The third camera 183 can comprise a Bayer filter 188b and a third image sensor 183a in order to record the third spectral portion 130 of remaining light which has a broad spectral range and can be denominated white light. This third spectral portion 130 can be used to give a general overview of the area in which surgery is performed.

In total, the optical beam splitter assembly 100 comprises three cameras 181, 182, 183, one camera 182 being a black-and-white camera with a black-and-white image sensor 189 and two cameras 181, 183 comprising Bayer filters 188a, 188b. The two cameras 181, 183 comprising Bayer filters 188a, 188b can also comprise black-and-white image sensors 189 behind the Bayer filters 188a, 188b. The two cameras 181, 183 can be color cameras that allow to take images with color information.

In the depicted embodiment, the black-and-white image sensor 182a, 189 of the black-and-white camera 182 is arranged at the second light output section 162 and the image sensors 181a, 183a of the cameras 181, 183 with the Bayer filters 188a, 188b are arranged at the first and the third light output sections 161, 163. In other embodiments, a black-and-white image sensor 189 and/or a black-and-white camera could be arranged at the first output section 161 to avoid any loss due to the first beam splitter 151.

The camera 181 associated with the first light output section 161 is configured to record a color image in an RGB color space, the color space having a predetermined set of color channels. The spectral portion 110 of the first light path 171 comprises two spectral subportions 111, 112, wherein a first subportion 111, namely the one associated with fluorescein, overlaps with a first color channel, namely green, of the color space but not a second color channel, namely red of the color space. The second subportion 112, namely one related with ICG, overlaps at least with the second color channel, namely red.

The two color channels can be separated by another color channel.

Each of the color channels can be a primary color, for example red, green or blue.

In other words, the reflected spectral portion 120 recorded by the second image sensor 182a associated with the second light output section 162 lies between the two spectral subportions 111, 112 recorded at the first light output section 161. Hence, the first and the second spectral portion 110, 120, do not overlap.

Further, the optical beam splitter assembly is configured to guide white light or remaining light to the third output section 163.The optical beam splitter assembly 100 is configured for guiding light of two fluorescence emission bands with a first and a second wavelength to the first light output section 161 and light of a fluorescence emission band with a third wavelength between the first and the second wavelength to the second light output section 162.

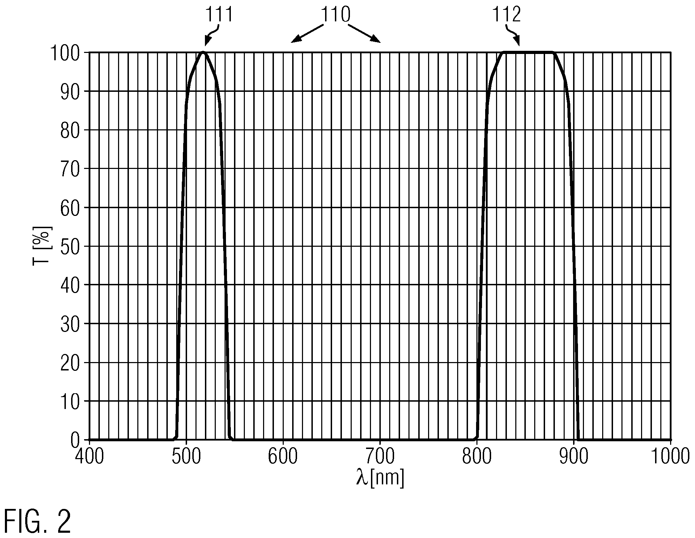

The resulting distribution of the different spectral portions can be seen in Figs. 2 to 4. In this case, light with wavelengths below approximately 900 nm enters the optical beam splitter assembly 100 through the light entrance section 160. The fluorescein band and the ICG band are directed towards the first camera 181 by the first beam splitter 151 and can in Fig. 2 be seen as two distinct peaks in the spectrum with a gap between the two peaks.

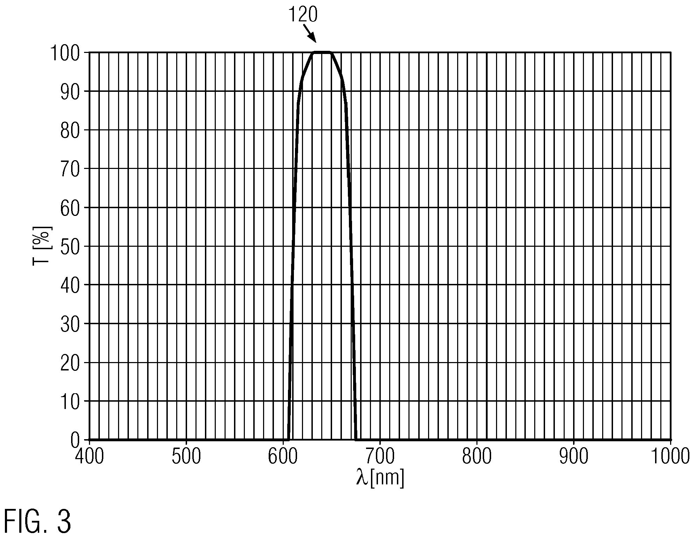

The 5-ALA peak is transmitted through the first beam splitter 151 and directed by the second beam splitter 152 towards the second camera 182. Due to the lack of a (Bayer) filter in the second camera 182, a high sensitivity can be achieved for this weak signal. As can be seen in Fig. 3, this peak is located between the two peaks measured at the first output section. This spatial separation of the peaks allows a good separation and reliable detection of the signals.

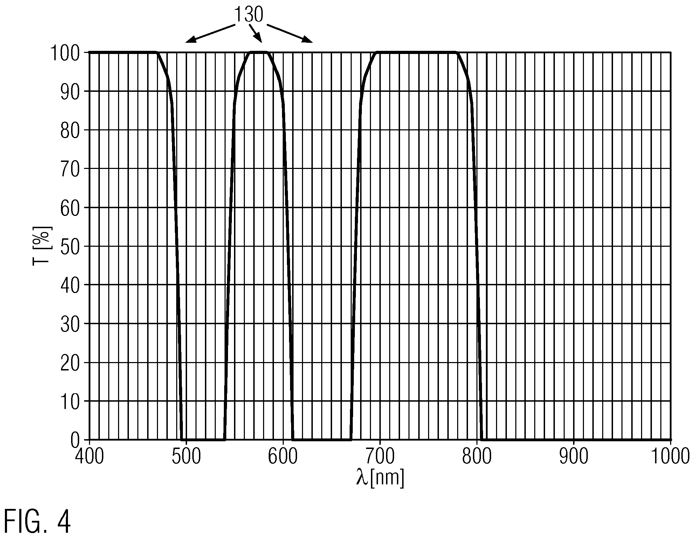

In Fig. 4, the portion of the light that arrives at the third output section 163 is shown. This is the light that enters the input section and is neither deflected towards the first output section 161 nor towards the second output section 162 nor absorbed. Due to the width of the spectrum, this portion can be named white light.

In a different embodiment, an image sensor 182a and/or a camera 182 associated with the second output section 162 could be configured to record a color image in a color space, the color space having a predetermined set of color channels and the spectral portion 120 of the second light path 172 comprises two spectral subportions wherein a first subportion overlaps with a first color channel of the color space and not a second color channel of the color space, wherein a second subportion overlaps at least with the second color channel.

In the present example, the optical beam splitter assembly is configured for guiding light of two fluorescence emission bands with a first and a second wavelength to the second light output section 162 and light of a fluorescence emission band with a third wavelength between the first and the second wavelength to the first light output section 161.

The two beam splitters 151, 152 each comprise a coating 195 on a prism 191, 192, 193.

Further, the optical beam splitter assembly 100 comprises a first prism 191 comprising the light entrance section 160 and the first light output section 161, a second prism 192 comprising the second light output section 162, and a third prism 193 comprising the third light output section 163.

The first beam splitter 151 is between the first prism 191 and the second prism 192. Moreover, the second beam splitter 152 is between the second prism 192 and the third prism 193.

In total, the optical beam splitter assembly 100 comprises three prisms 191, 192, 193 that are connected to each other to form a unitary block 199. This can simplify the handling. In particular, the optical beam splitter assembly 100 can be part of a camera head 140 of the microscope assembly 145 or the microscope.

The optical beam splitter assembly 100 is configured for the combined use of fluorescein, ICG and 5-ALA. This is achieved as the first subportion 111 and the second subportion 112 of the first portion 110 and the second portion 120 are such that each of them overlaps with one fluorescence emission band of fluorescein, ICG and 5-ALA but not with the fluorescence emission bands of the other fluorophores.

Although some aspects have been described in the context of an apparatus, it is clear that these aspects also represent a description of the corresponding method, not forming part of the claimed invention, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, such as for example, a processor, a microprocessor, a programmable computer or an electronic circuit. In some examples, one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some examples comprise a data carrier having electronically readable control signals, which are capable of cooperating with a programmable computer system, such that one of the methods described herein is performed.

Generally, examples can be implemented as a computer program product with a program code, the program code being operative for performing one of the methods when the computer program product runs on a computer. The program code may, for example, be stored on a machine readable carrier.

Other examples comprise the computer program for performing one of the methods described herein, stored on a machine readable carrier.

In other words, an example is, therefore, a computer program having a program code for performing one of the methods described herein, when the computer program runs on a computer.

A further example is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further example is, therefore, a data stream or a sequence of signals representing the computer program for performing one of the methods described herein. The data stream or the sequence of signals may, for example, be configured to be transferred via a data communication connection, for example, via the internet.

A further example comprises a processing means, for example, a computer or a programmable logic device, configured to, or adapted to, perform one of the methods described herein.

A further example comprises a computer having installed thereon the computer program for performing one of the methods described herein.

A further example comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some examples, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE NUMERALS

- 100: beam splitter assembly
- 110: first spectral portion
- 111: first spectral subportion
- 112: second spectral subportion
- 120: second spectral portion
- 130: third spectral portion
- 140: camera head
- 145: microscope assembly
- 146: image processing device
- 148: display device
- 151: first beam splitter
- 152: second beam splitter
- 155: dichroic mirror
- 160: light entrance section
- 161: first light output section
- 162: second light output section
- 163: third light output section
- 171: first light path
- 172: second light path
- 173: third light path
- 181: first camera
- 181a: first image sensor
- 182: second camera
- 182a: second image sensor
- 183: third camera
- 183a: third image sensor
- 188a: Bayer filter
- 188b: Bayer filter
- 189: black-and-white image sensor
- 191: first prism
- 192: second prism
- 193: third prism
- 195: coating
- 199: block

## Claims

1. Optical beam splitter assembly (100) for recording images in at least three different spectral portions (110, 120, 130), comprising a first and a second beam splitter (151, 152), and a first, second and third light path (171, 172, 173), the first light path (171) being configured to guide light of a first spectral portion (110) from a light entrance section (160) to a first light output section (161), the second light path (172) being configured to guide light of a second spectral portion (120) from the light entrance section (160) to a second light output section (162), the second light output section (162) being spaced apart from the first light output section (161), and the third light path (173) being configured to guide light of a third spectral portion (130) from the light entrance section (160) to a third light output section (163), the third light output section (163) being spaced apart from the first light output section (161) and the second light output section (162), wherein the second light path (172) traverses the first beam splitter (151), and the third light path (173) traverses the first and the second beam splitter (151, 152), wherein the optical beam splitter assembly (100) comprises three cameras (181, 182, 183) for detecting the light at the first, second and third output section (161, 162, 163), one camera (181, 182) being a black-and-white camera and two cameras (181, 182, 183) comprising Bayer filters (188a, 188b), wherein the camera (181, 182) associated with either the first light output section (161) or the second light output section (162) is configured to record a color image in a color space, the color space having a predetermined set of color channels and the spectral portion (110) of the first light path (171) comprises two spectral subportions (111, 112), wherein a first subportion overlaps with a first color channel of the color space and not a second color channel of the color space, wherein a second subportion overlaps at least with a second color channel, **characterized in that** the reflected spectral portion (120) recorded by the black-and-white camera (182, 181) associated with other one of the first light output section (161) and the second light output section (162) lies between the two spectral subportions (111, 112) recorded at the first light output section (161) or the second light output section (162), respectively.

2. Optical beam splitter assembly (100) according to claim 1, wherein at least one of the spectral portions (110, 120) of the light guided by the first light path (171) and the second light path (172) comprises two spectral subportions (111, 112) spaced apart from each other.

3. Optical beam splitter assembly (100) according to one of claims 1 or 2, wherein at least one beam splitter (151, 152) comprises a coating (195) on a prism (191, 192, 193).

4. Optical beam splitter assembly (100) according to one of claims 1 to 3, wherein the optical beam splitter assembly (100) comprises at least one of a first prism (191) comprising the light entrance section (160) and the first light output section (161), a second prism (192) comprising the second light output section (162), and a third prism (193) comprising the third light output section (163).

5. Optical beam splitter assembly (100) according to one of claims 1 to 4, wherein the optical beam splitter assembly (100) comprises three prisms (191, 192, 193) that are connected to each other to form a unitary block (199).

6. Optical beam splitter assembly (100) according to one of claims 1 to 5, wherein the first and the second spectral portion (110, 120) do not overlap.

7. Optical beam splitter assembly (100) according to one of claims 1 to 6, configured for the combined use of fluorescein, ICG and 5-ALA.

8. Camera head (140) for a microscope, comprising the optical beam splitter assembly (100) according to one of claims 1 to 7.

9. Microscope assembly (145), comprising the optical beam splitter assembly (100) according to one of claims 1 to 7 and an image processing device (146), wherein the image processing device (146) is configured to create a single image from three images from the three light output sections (161, 162, 163).

## Patentansprüche

1. Optische Strahlteileranordnung (100) zum Aufzeichnen von Bildern in wenigstens drei verschiedenen spektralen Abschnitten (110, 120, 130), umfassend einen ersten und einen zweiten Strahlteiler (151, 152) und einen ersten, zweiten und dritten Lichtweg (171, 172, 173), wobei der erste Lichtweg (171) zum Leiten von Licht eines ersten spektralen Abschnitts (110) von einem Lichteingangsabschnitt (160) zu einem ersten Lichtausgangsabschnitt (161) ausgebildet ist, wobei der zweite Lichtweg (172) zum Leiten von Licht eines zweiten spektralen Abschnitts (120) vom Lichteingangsabschnitt (160) zu einem zweiten Lichtausgangsabschnitt (162) ausgebildet ist, wobei der zweite Lichtausgangsabschnitt (162) vom ersten Lichtausgangsabschnitt (161) beabstandet ist, und wobei der dritte Lichtweg (173) zum Leiten von Licht eines dritten spektralen Abschnitts (130) vom Lichteingangsabschnitt (160) zu einem dritten Lichtausgangsabschnitt (163) ausgebildet ist, wobei der dritte Lichtausgangsabschnitt (163) vom ersten Lichtausgangsabschnitt (161) und zweiten Lichtausgangsabschnitt (162) beabstandet ist, wobei der zweite Lichtweg (172) den ersten Strahlteiler (151) durchquert, und der dritte Lichtweg (173) den ersten und den zweiten Strahlteiler (151, 152) durchquert, wobei die optische Strahlteileranordnung (100) drei Kameras (181, 182, 183) zum Erfassen des Lichts am ersten, zweiten und dritten Ausgangsabschnitt (161, 162, 163) umfasst, wobei eine Kamera (181, 182) eine Schwarz/Weiß-Kamera ist und wobei zwei Kameras (181, 182, 183) Bayer-Filter (188a, 188b) umfassen, wobei die mit entweder dem ersten Lichtausgangsabschnitt (161) oder dem zweiten Lichtausgangsabschnitt (162) verbundene Kamera (181, 182) zum Aufzeichnen eines Farbbildes in einem Farbraum ausgebildet ist, wobei der Farbraum eine vorbestimmte Menge von Farbkanälen aufweist und der spektrale Abschnitt (110) des ersten Lichtweges (171) zwei spektrale Teilabschnitte (111, 112) umfasst, wobei ein erster Teilabschnitt mit einem ersten Farbkanal des Farbraums und nicht einem zweiten Farbkanal des Farbraums überlappt, wobei ein zweiter Teilabschnitt wenigstens mit einem zweiten Farbkanal überlappt, **dadurch gekennzeichnet, dass** der von der mit dem anderen von erstem Lichtausgangsabschnitt (161) und zweitem Lichtausgangsabschnitt (162) verbundenen Schwarz/Weiß-Kamera (182, 181) aufgezeichnete reflektierte spektrale Abschnitt (120) zwischen den zwei jeweils am ersten Lichtausgangsabschnitt (161) oder zweiten Lichtausgangsabschnitt (162) aufgezeichneten spektralen Teilabschnitten (111, 112) liegt.

2. Optische Strahlteileranordnung (100) nach Anspruch 1, wobei wenigstens einer der spektralen Abschnitte (110, 120) des vom ersten Lichtweg (171) und zweiten Lichtweg (172) geleiteten Lichts zwei zueinander beabstandete spektrale Teilabschnitte (111, 112) umfasst.

3. Optische Strahlteileranordnung (100) nach Anspruch 1 oder 2, wobei wenigstens ein Strahlteiler (151, 152) eine Beschichtung (195) auf einem Prisma (191, 192, 193) umfasst.

4. Optische Strahlteileranordnung (100) nach einem der Ansprüche 1 bis 3, wobei die optische Strahlteileranordnung (100) wenigstens eines von einem ersten Prisma (191), umfassend den Lichteingangsabschnitt (160) und den ersten Lichtausgangsabschnitt (161), einem zweiten Prisma (192), umfassend den zweiten Lichtausgangsabschnitt (162), und einem dritten Prisma (193), umfassend den dritten Lichtausgangsabschnitt (163), umfasst.

5. Optische Strahlteileranordnung (100) nach einem der Ansprüche 1 bis 4, wobei die optische Strahlteileranordnung (100) drei Prismen (191, 192, 193) umfasst, die miteinander verbunden sind, um einen einteiligen Block (199) zu bilden.

6. Optische Strahlteileranordnung (100) nach einem der Ansprüche 1 bis 5, wobei der erste und der zweite spektrale Abschnitt (110, 120) nicht überlappen.

7. Optische Strahlteileranordnung (100) nach einem der Ansprüche 1 bis 6, ausgebildet für die kombinierte Verwendung von Fluoreszein, ICG und 5-ALA.

8. Kamerakopf (140) für ein Mikroskop umfassend die optische Strahlteileranordnung (100) nach einem der Ansprüche 1 bis 7.

9. Mikroskopanordnung (145), umfassend die optische Strahlteileranordnung (100) nach einem der Ansprüche 1 bis 7 und eine Bildverarbeitungsvorrichtung (146), wobei die Bildverarbeitungsvorrichtung (146) zum Erzeugen eines Einzelbildes aus drei Bildern von den drei Lichtausgangsabschnitten (161, 162, 163) ausgebildet ist.

## Revendications

1. Ensemble séparateur de faisceau optique (100) pour enregistrer des images dans au moins trois parties spectrales différentes (110, 120, 130), comprenant des premier et deuxième séparateurs de faisceau (151, 152), et des premier, deuxième et troisième trajets de lumière (171, 172, 173), le premier trajet de lumière (171) étant configuré pour guider la lumière d'une première partie spectrale (110) depuis une section d'entrée de lumière (160) vers une première section de sortie de lumière (161), le deuxième trajet de lumière (172) étant configuré pour guider la lumière d'une deuxième partie spectrale (120) depuis la section d'entrée de lumière (160) vers une deuxième section de sortie de lumière (162), la deuxième section de sortie de lumière (162) étant espacée de la première section de sortie de lumière (161), et le troisième trajet de lumière (173) étant configuré pour guider la lumière d'une troisième partie spectrale (130) depuis la section d'entrée de lumière (160) vers une troisième section de sortie de lumière (163), la troisième section de sortie de lumière (163) étant espacée de la première section de sortie de lumière (161) et de la deuxième section de sortie de lumière (162), dans lequel le deuxième trajet de lumière (172) traverse le premier séparateur de faisceau (151), et le troisième trajet de lumière (173) traverse les premier et deuxième séparateurs de faisceau (151, 152), dans lequel l'ensemble séparateur de faisceau optique (100) comprend trois caméras (181, 182, 183) pour détecter la lumière au niveau des première, deuxième et troisième sections de sortie (161, 162, 163), une caméra (181, 182) étant une caméra noir et blanc et deux caméras (181, 182, 183) comprenant des filtres Bayer (188a, 188b), dans lequel la caméra (181, 182) associée soit à la première la section de sortie de lumière (161) ou la deuxième section de sortie de lumière (162) est configurée pour enregistrer une image couleur dans un espace couleur, l'espace couleur ayant un ensemble prédéterminé de canaux couleur et la partie spectrale (110) du premier trajet de lumière (171) comprend deux sous-parties spectrales (111, 112), dans lequel une première sous-partie chevauche un premier canal couleur de l'espace couleur et non un deuxième canal couleur de l'espace couleur, dans lequel une deuxième sous-partie chevauche au moins un deuxième canal couleur, **caractérisé en ce que** la partie spectrale réfléchie (120) enregistrée par la caméra noir et blanc (182, 181) associée à l'autre section de la première section de sortie de lumière (161) et de la deuxième section de sortie de lumière (162) se situe entre les deux des sous-parties spectrales (111, 112) enregistrées au niveau de la première section de sortie de lumière (161) ou de la deuxième section de sortie de lumière (162), respectivement.

2. Ensemble séparateur de faisceau optique (100) selon la revendication 1, dans lequel au moins une des parties spectrales (110, 120) de la lumière guidée par le premier trajet de lumière (171) et le deuxième trajet de lumière (172) comprend deux sous-parties spectrales (111, 112) espacées l'une de l'autre.

3. Ensemble séparateur de faisceau optique (100) selon l'une des revendications 1 ou 2, dans lequel au moins un séparateur de faisceau (151, 152) comprend un revêtement (195) sur un prisme (191, 192, 193).

4. Ensemble séparateur de faisceau optique (100) selon l'une des revendications 1 à 3, dans lequel l'ensemble séparateur de faisceau optique (100) comprend au moins l'un d'un premier prisme (191) comprenant la section d'entrée de lumière (160) et la première section de sortie de lumière (161), d'un deuxième prisme (192) comprenant la deuxième section de sortie de lumière (162), et d'un troisième prisme (193) comprenant la troisième section de sortie de lumière (163).

5. Ensemble séparateur de faisceau optique (100) selon l'une des revendications 1 à 4, dans lequel l'ensemble séparateur de faisceau optique (100) comprend trois prismes (191, 192, 193) qui sont reliés entre eux pour former un bloc unitaire (199).

6. Ensemble séparateur de faisceau optique (100) selon l'une des revendications 1 à 5, dans lequel les première et deuxième parties spectrales (110, 120) ne se chevauchent pas.

7. Ensemble séparateur de faisceau optique (100) selon l'une des revendications 1 à 6, configuré pour l'utilisation combinée de fluorescéine, d'ICG et de 5-ALA.

8. Tête de caméra (140) pour un microscope, comprenant l'ensemble séparateur de faisceau optique (100) selon l'une des revendications 1 à 7.

9. Ensemble microscope (145), comprenant l'ensemble séparateur de faisceau optique (100) selon l'une des revendications 1 à 7 et un dispositif de traitement d'image (146), dans lequel le dispositif de traitement d'image (146) est configuré pour créer une image unique à partir de trois images provenant de trois sections de sortie de lumière (161, 162, 163).
